(19) Europäisches Patentamt
European Patent Office
Office européen des brevets

(11) Veröffentlichungsnummer: **0 330 040 A2**

(12) **EUROPÄISCHE PATENTANMELDUNG**

(21) Anmeldenummer: **89102428.3**

(51) Int. Cl.⁴: **C09B 11/26 , C09B 67/30**

(22) Anmeldetag: **13.02.89**

(30) Priorität: **26.02.88 DE 3806076**

(43) Veröffentlichungstag der Anmeldung:
**30.08.89 Patentblatt 89/35**

(84) Benannte Vertragsstaaten:
**CH DE FR GB LI**

(71) Anmelder: **BAYER AG**
**D-5090 Leverkusen 1 Bayerwerk(DE)**

(72) Erfinder: **Eckstein, Udo, Dr.**
**Wolfskaul 8**
**D-5000 Köln 80(DE)**

(54) **Triarylmethan-Farbbildner.**

(57) Farbbildner der Formel

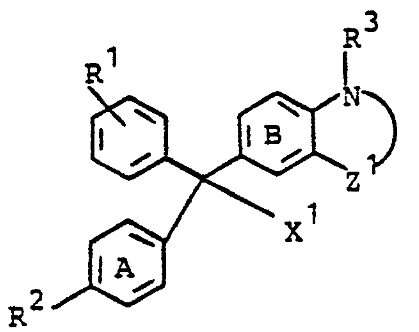

(I),

worin
$X^1$ Hydroxy, Alkoxy, Alkenyloxy, Aralkoxy, Cycloalkoxy, Aryloxy oder Acyloxy,
$R^1$ Wasserstoff, Halogen, Alkyl oder Alkoxy,
$R^2$ Wasserstoff, Alkoxy, Aralkoxy, Aryloxy oder einen Rest der Formel

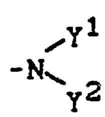

$Y^1$ und $Y^2$ unabhängig voneinander Alkyl, Cycloalkyl oder Aralkyl bedeuten,
$R^2$ mit A in o-Stellung einen heterocyclischen Ring bilden kann, dem Ring A außerdem in o-/m-Stellung zu $R^2$ ein Benzolring anelliert sein kann,
$R^3$ Wasserstoff, Alkyl, Alkenyl, Aralkyl, Cycloalkyl oder Aryl bedeutet oder $R^3$ mit Ring B in der o-Stellung zum Stickstoff verbunden ist,
$Z^1$ für die restlichen Glieder eines teilhydrierten oder ganz hydrierten Ringes steht, mit der Maßgabe, daß $Z^1$ nicht für $-CH_2-CH_2-C(Alkyl)_2$

EP 0 330 040 A2

steht, wenn die Dialkylmethyl-Gruppe mit dem Stickstoffatom verbunden ist,
die Ringe A und B sowie die cyclischen und acylischen Reste weitere nichtionische Substituenten tragen können, finden Verwendung in Thermoreaktivpapieren und druckempfindlichen Aufzeichnungsmaterialien.

## Triarylmethan-Farbbildner

Gegenstand der Erfindung sind Farbbildner der allgemeinen Formel

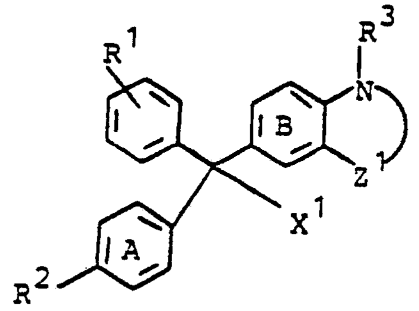

(I),

worin

$X^1$ Hydroxy, Alkoxy, Alkenyloxy, Aralkoxy, Cycloalkoxy, Aryloxy oder Acyloxy,

$R^1$ Wasserstoff, Halogen, Alkyl oder Alkoxy,

$R^2$ Wasserstoff, Alkoxy, Aralkoxy, Aryloxy oder einen Rest der Formel

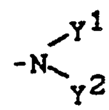

$Y^1$ und $Y^2$ unabhängig voneinander Alkyl, Cycloalkyl oder Aralkyl bedeuten,

$R^2$ mit A in o-Stellung einen heterocyclischen Ring bilden kann, dem Ring A außerdem in o-/m-Stellung zu $R^2$ ein Benzolring anelliert sein kann,

$R^3$ Wasserstoff, Alkyl, Alkenyl, Aralkyl, Cycloalkyl oder Aryl bedeutet oder $R^3$ mit Ring B in der o-Stellung zum Stickstoff verbunden ist und dann die restlichen Glieder eines teilhydrierten oder ganz hydrierten, heterocyclischen 5- oder 6-gliedrigen Ringes, der ein weiteres Heteroatom aus der Reihe O, S, N-$R^1$ oder N-$R^2$ enthalten kann, bedeutet,

$Z^1$ für die restlichen Glieder eines teilhydrierten oder ganz hydrierten, heterocyclischen 5- oder 6-gliedrigen Ringes, der ein weiteres Heteroatom aus der Reihe O, S, N-$R^1$ oder N-$R^2$ enthalten kann, steht, mit der Maßgabe, daß $Z^1$ nicht für $-CH_2-CH_2-\underset{|}{C}(Alkyl)_2$ steht, wenn die Dialkylmethyl-Gruppe mit dem Stickstoffatom verbunden ist,

die Ringe A und B sowie die cyclischen und acylischen Reste weitere in der Farbstoffchemie übliche, nichtionische Substituenten tragen können, ihre Herstellung, ihre Verwendung in Thermoreaktivpapieren und druckempfindlichen Aufzeichnungsmaterialien und die Herstellung ihrer hochkonzentrierten Lösungen in organischen Lösungsmitteln aus der Gruppe der gegebenenfalls chlorierten Koh lenwasserstoffe oder Phthalsäureester sowie die Verwendung dieser Lösungen zur Herstellung von druckempfindlichen Aufzeichnungsmaterialien.

In der Farbstoffchemie übliche nichtionische Substituenten sind z.B. Halogen, Hydroxy, Alkoxy, Alkenyloxy, Aryloxy, Aralkoxy, Cycloalkyloxy, Aryl, Alkylmercapto, Arylmercapto, Aralkylmercapto, Alkylsulfonyl, Cyan, Carbamoyl, Alkoxycarbonyl, Amino, das durch 1 oder 2 Alkyl-, Cycloalkyl-, Aryl- oder Aralkylgruppen substituiert sein kann oder dessen Substituenten ringgeschlossen sein können, bevorzugt zu einem 5- oder 6-gliedrigen Ring, Acylamino, Alkylcarbonyloxy und Arylcarbonyloxy und als Substituenten der Ringe außerdem Alkyl, Aryl, Aralkyl, Alkenyl oder Arylvinyl.

Alkyl steht für $C_1$-$C_{30}$-Alkyl, insbesondere für $C_1$-$C_{12}$-Alkyl.

Die Alkylreste und die Alkylreste in Alkoxy-, Alkylthio-, Alkylamino-, Alkanoylamino-, Alkylsulfonyl- und Alkoxycarbonylgruppen können verzweigt sein und beispielsweise durch Fluor, Chlor, Hydroxy, $C_1$-$C_4$-Alkoxy, Cyan, Aryloxy oder $C_1$-$C_4$-Alkoxycarbonyl substituiert sein.

Aralkyl ist insbesondere Phenyl-$C_1$- bis -$C_4$-alkyl, das im Phenylkern durch Halogen, $C_1$-$C_4$-Alkyl und/oder $C_1$-$C_4$-Alkoxy substituiert sein kann.

Cycloalkyl ist insbesondere gegebenenfalls durch Methyl substituiertes Cyclopentyl oder Cyclohexyl.

Alkenyl ist insbesondere $C_2$-$C_5$-Alkenyl, das durch Hydroxy, $C_1$-$C_4$-Alkoxy, Cyan, $C_1$-$C_4$-Alkoxycarbonyl, Chlor oder Brom monosubstituiert sein kann.

Bevorzugt sind Vinyl und Allyl.

Halogen ist insbesondere Fluor, Chlor und Brom, vorzugsweise Chlor.

Aryl ist insbesondere gegebenenfalls durch ein bis drei $C_1$- bis $C_4$-Alkyl, Chlor, Brom, Cyan, $C_1$-$C_4$-Alkoxycarbonyl oder $C_1$-$C_4$-Alkoxy substituiertes Phenyl oder Naphthyl.

Alkoxy ist insbesondere gegebenenfalls durch Chlor oder $C_1$-$C_4$-Alkoxy substituiertes $C_1$-$C_{12}$-Alkoxy.

Acyl ist insbesondere $C_1$-$C_4$-Alkylcarbonyl und $C_1$-$C_4$-Alkoxycarbonyl, gegebenenfalls durch $C_1$-$C_4$-Alkyl, Phenyl oder Benzyl mono- oder disubstituiertes Aminocarbonyl oder Aminosulfonyl.

Alkoxycarbonyl ist insbesondere gegebenenfalls durch Hydroxy, Halogen oder Cyan substituiertes $C_1$-$C_4$-Alkoxycarbonyl.

Die Ringe können durch nichtionische Substituenten, insbesondere durch $C_1$-$C_4$-Alkyl, $C_1$-$C_4$-Alkoxy, Cyan, Nitro oder Halogen substituiert sein.

Von den Farbbildnern der Formel (I) haben die Verbindungen der Formel

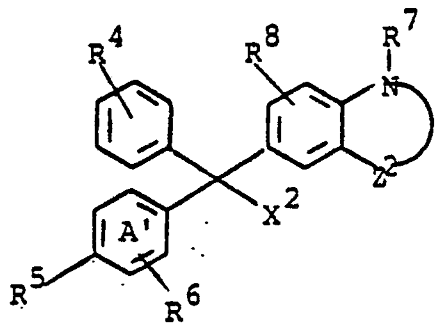

(II)

besondere Bedeutung, worin

$X^2$ Hydroxy, gegebenenfalls durch $C_1$-$C_4$-Alkoxy substituiertes $C_1$-$C_{12}$-Alkoxy oder Benzyloxy,

$R^4$ Wasserstoff, Chlor, $C_1$-$C_{12}$-Alkyl oder $C_1$-$C_4$-Alkoxy,

$R^5$ Wasserstoff, $C_1$-$C_{12}$-Alkoxy, Benzyloxy, Phenoxy oder einen Rest der Formel

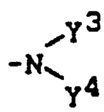

$R^6$ Wasserstoff, Chlor, $C_1$-$C_{12}$-Alkyl, $C_1$-$C_{12}$-Alkoxy, $C_1$-$C_4$-Alkylamino oder Di-$C_1$-$C_{12}$-Alkylamino,

$Y^3$ und $Y^4$ unabhängig voneinander gegebenenfalls durch Chlor, Cyano, $C_1$-$C_4$-Alkoxycarbonyl oder $C_1$-$C_4$-Alkoxy substituiertes $C_1$-$C_{12}$-Alkyl, Cyclohexyl oder Benzyl, das durch Chlor, $C_1$-$C_4$-Alkyl oder $C_1$-$C_4$-Alkoxy substituiert sein kann, oder

$R^5$ mit A′ in o-Stellung ein heterocyclisches Ring-system der Formel

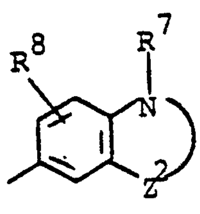

(1)

bildet und

der Rest (1) für

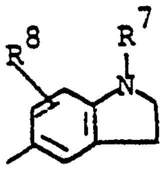 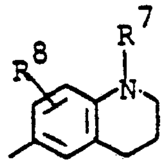 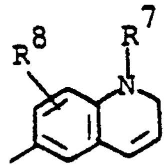 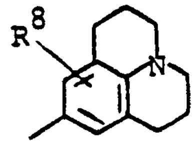

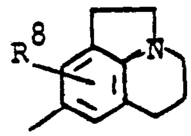 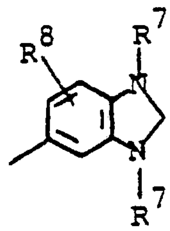 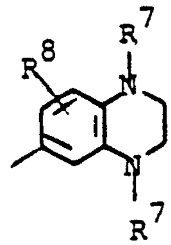 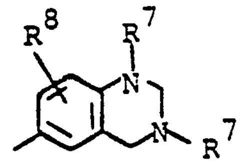

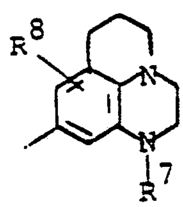 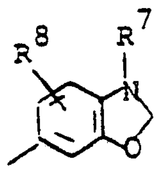 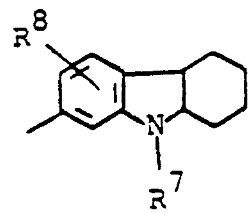

steht,
wobei die (teil)gesättigten Ringe bis zu 4 Reste aus der Gruppe Chlor, $C_1$-$C_4$-Alkyl, $C_1$-$C_4$-Alkoxy oder Phenyl tragen können, mit der Maßgabe, daß die 2-Stellung des Tetrahydrochinolinringes nicht durch 2 $C_1$-$C_4$-Alkylgruppen substituiert ist, wenn die 3-und 4-Stellung unsubstituiert sind, und
$R^7$ Wasserstoff, gegebenenfalls durch Chlor, Hydroxy, $C_1$-$C_4$-Alkoxy oder Acetyloxy substituiertes $C_1$-$C_{12}$-Alkyl, Cyclohexyl, $C_1$-$C_4$-Alkylcarbonyl oder gegebenenfalls durch Chlor oder $C_1$-$C_4$-Alkyl substituiertes Benzyl oder Phenyl und
$R^8$ Wasserstoff, Chlor, $C_1$-$C_4$-Alkyl, $C_1$-$C_4$-Alkoxy, Amino, das durch 1 oder 2, gegebenenfalls durch Chlor, Cyan, $C_1$-$C_4$-Alkoxycarbonyl, Hydroxy oder $C_1$-$C_4$-Alkoxy substituierte $C_1$-$C_4$-Alkyl-, Cyclohexyl-, Phenyl- oder Benzylreste substituiert sein kann,
bedeuten.

Beispiele für die Reste (1) sind:

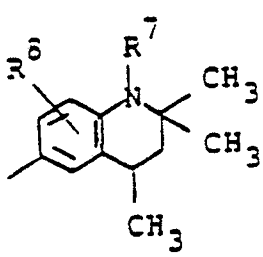 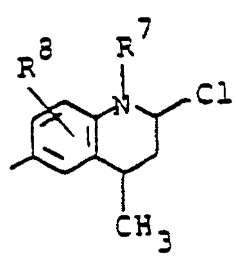 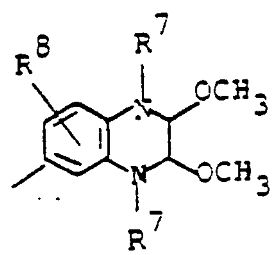

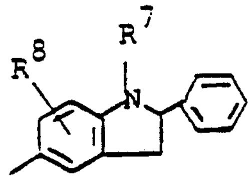 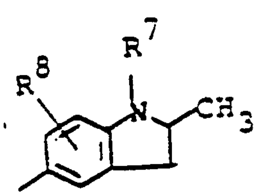 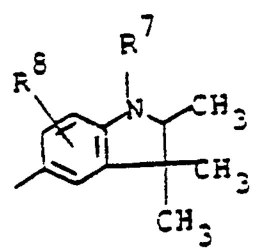 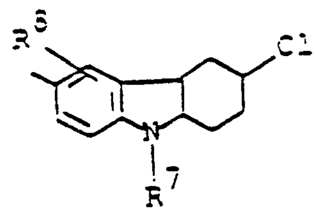

Besonders bevorzugt werden Farbbildner der Formel

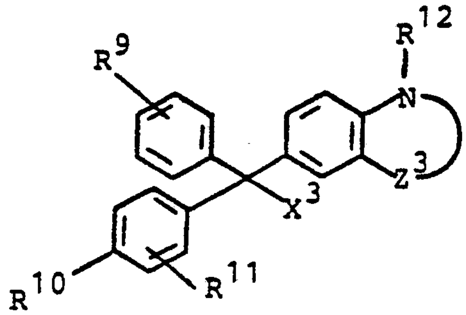

(III),

worin
$X^3$ Hydroxy oder $C_1$-$C_{12}$-Alkoxy,
$R^9$ Wasserstoff, Chlor, $C_1$-$C_{12}$-Alkyl, Methoxy oder Ethoxy,
$R^{10}$ $C_1$-$C_4$-Alkoxy, Benzyloxy oder einen Rest der Formel

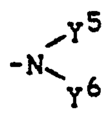

,

$R^{11}$ Wasserstoff, Methyl, Ethyl, Propyl, Butyl, Methoxy, Ethoxy, Dimethylamino oder Diethylamino,
$Y^5$ und $Y^6$ unabhängig voneinander, gegebenenfalls durch Chlor, Cyano oder $C_1$-$C_4$-Alkoxy substituiertes $C_1$-$C_{12}$-Alkyl oder Benzyl,
$R^{12}$ Wasserstoff, gegebenenfalls durch Chlor, Hydroxy, Methoxy, Ethoxy oder Acetyloxy substituiertes $C_1$-$C_{12}$-Alkyl oder Benzyl, bedeuten oder
$R^{10}$ und $R^{11}$ Glieder sind, die zusammen mit dem Benzolring, an den sie gebunden sind, zur Vervollständigung eines Ringsystems der Formel

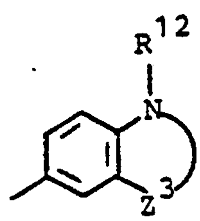

(2)

erforderlich sind, wobei (2) für

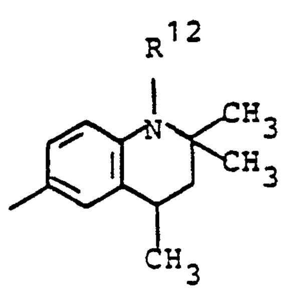

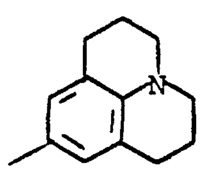

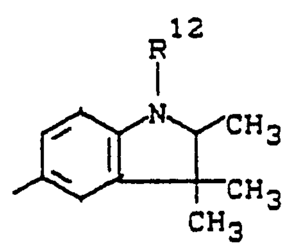

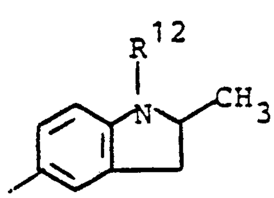

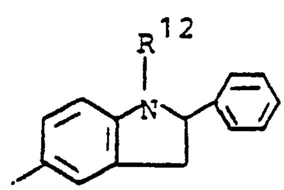

steht.

Geeignete (Chlor)Kohlenwasserstoffe für die erfindungsgemäßen Lösungen sind hochsiedende (150-400° C) (Chlor)-Kohlenwasserstoffe, die bei Raumtemperatur flüssig sind, z.B. Paraffine, insbesondere $C_{10}$-$C_{20}$-n-Paraffine, $C_{10}$-$C_{20}$-iso-Paraffine und $C_{10}$-$C_{17}$-Chlorparaffine mit 15 bis 70 Gew.-% Chlorgehalt sowie ihre technischen Gemische, z.B. Kerosin ($C_{10}$-$C_{16}$-Paraffin) oder Weißöle (50 bis 70 % Paraffine und 30 bis 50 % Naphthene), aromatische Kohlenwasserstoffe, die Alkylgruppen mit vorzugsweise 1 bis 18 Kohlenstoffatome enthalten, wie Alkylbiphenyl, insbesondere iso-Propylbiphenyl, tert.-Butylbiphenyl, Dialkylbiphenyl, insbesondere Di-isopropylbiphenyl und Di-tert.-butyl-biphenyl, Alkyl- und Dialkyl-naphthalin, insbesondere iso-Propyl-naphthalin und Di-tert.-butyl-naphthalin, Alkylbenzol, insbesondere Dodecylbenzol, hydrierte und teilhydrierte Terphenyle, insbesondere Cyclohexyldiphenyl, Diarylalkane, insbesondere Diphenylethan oder Ethyldiphenylmethan.

Geeignete Ester der Phthalsäure sind z.B. solche von $C_2$-$C_{18}$-aliphatischen Alkoholen, insbesondere Dibutylphtalat.

Bevorzugte hochkonzentrierte Lösungen enthalten 10 bis 50 Gew.-% Farbbildner.

Ein weiterer Gegenstand der Erfindung ist ein Verfahren zur Herstellung von Verbindungen der Formel (I), dadurch gekennzeichnet, daß man bevorzugt in einer Eintopfreaktion Ketone der Formel

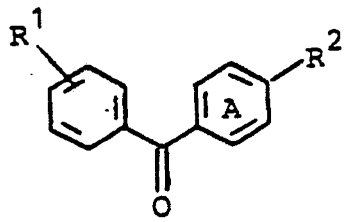

(IV)

mit Aminen der Formel

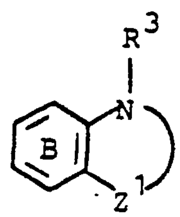

(V)

oder Ketonen der Formel

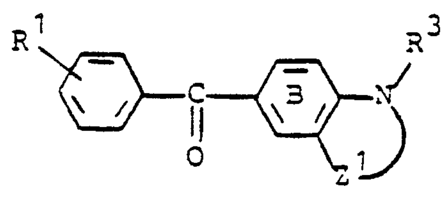

(VI)

mit Aminen der Formel

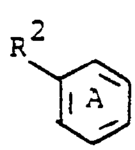

(VII)

in Gegenwart eines Kondensationsmittels, das ein Anion $An^-$ liefert, zu den Farbsalzen der Formel

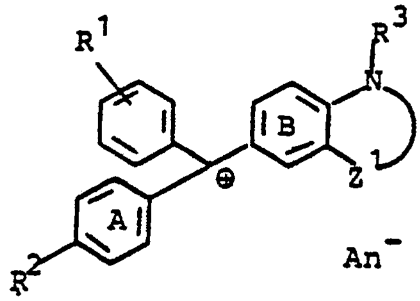

(VIII)

kondensiert, worin
A, B, $R^1$, $R^2$, $R^3$ und $Z^1$ die vorgenannte Bedeutung haben und
$An^-$ ein Anion aus der Reihe Cl, Br, Acetat, Sulfat oder Phosphat bedeutet, und
diese ohne Zwischenisolierung mit den Basen der Formel
$MeX^1$ (IX),
worin
$X^1$ die vorgenannte Bedeutung hat und
Me ein Alkali- oder Erdalkaliion, insbesondere Natrium oder Kalium, bedeutet,
in einem für die Umsetzung üblichen organischen Reaktionsmedium umsetzt, wasserunlösliche Lösungsmittel zusetzt und nach der Reaktion gegebenenfalls nach Zusatz von Wasser die entstehenden Schichten abtrennt. Nach Entfernung des niedrigsiedenden Lösungsmittels aus der organischen Phase erhält man

a) bei Verwendung von niedrigsiedenden, wasserunlöslichen Lösungsmitteln direkt die Farbbildner in sehr reiner Form oder

b) bei Verwendung von niedrigsiedenden und hochsiedenden, wasserunlöslichen Lösungsmitteln direkt die gebrauchsfertigen, hochkonzentrierten Lösungen.

Als Kondensationsmittel werden dabei vorzugsweise Phosphoroxychlorid und/oder Diphosphorpentoxid eingesetzt.

Geeignete Reaktionsmedien sind polare Lösungsmittel wie Dimethylformamid, Dimethylsulfoxid, Hexamethylphosphorsäuretriamid und Alkanole. Bevorzugt sind Dimethylformamid und $C_1$-$C_{18}$-Alkanole.

Geeignete Reaktionstemperaturen liegen zwischen 20 und 120 °C, bevorzugt sind 30 bis 80 °C.

Geeignete niedrigsiedende (40-145 °C), wasserunlösliche Lösungsmittel sind Kohlenwasserstoffe wie Dichlormethan, Chloroform, Tetrachlorkohlenwasserstoff, 1,2-Dichlorethan, Benzol, Toluol, Xylol und Chlorbenzol.

Die Triarylmethan-Farbbildner der Formel (I) sind normalerweise farblos oder höchstens schwach gefärbt.

Es zeigte sich, daß die Farbbildner der Formel (I) in den genannten wasserunlöslichen organischen Lösungsmitteln überraschend gut löslich sind. Es können Lösungen mit einem Farbbildnergehalt bis zu 50 Gew.-% erhalten werden.

Die erhaltenen Farbbildner-Lösungen können ohne weitere Reinigung in den Handel gebracht und in druckempfindlichen Aufzeichnungsmaterialien, insbesondere in mikroverkapselten Materialien, eingesetzt werden.

Sie besitzen auch bei Temperaturschwankungen eine ausgezeichnete Stabilität.

Zur Verwendung in den Aufzeichnungsmaterialien werden sie mit den Lösungsmitteln der erfindungsgemäßen Lösungen auf Konzentrationen von etwa 3 bis 10 Gew.-% verdünnt.

Die erfindungsgemäßen Verbindungen sowie ihre Lösungen ergeben bei Kontakt mit einem sauren Entwickler, d.h. einem Elektronenakzeptor, intensive gelbe, grünblaue, grüne, orange oder rote Farbtöne, die ausgezeichnet sublimations- und lichtecht sind.

Sie sind auch wertvoll im Gemisch mit einem oder mehreren anderen bekannten Farbbildnern, z.B. 3,3-Bis-(amino-phenyl)-phthaliden, 3,3-Bis-(indolyl)-phthaliden, 3-Aminofluoranen, 2,6-Diaminofluoranen, Leukoauraminen, Spiropyranen, Spirodipyranen, Chromenoindolen, Phenoxazinen, Phenothiazinen, Carbazolylmethanen oder anderen Triarylmethanleukofarbstoffen, um grüne, violette, blaue, marineblaue, graue oder schwarze Färbungen zu ergeben.

Sie zeigen sowohl auf phenolischen Unterlagen als auch auf aktivierten Tonen eine gute Farbintensität,

hohe Lichtechtheit und ausgezeichnete Alterungs- und CB-Stabilität. Sie eignen sich für druckempfindliches Aufzeichnungsmaterial, das sowohl Kopier- als auch Registriermaterial sein kann. Ihre Entwicklungsgeschwindigkeit ist in Abhängigkeit von den Substituenten unterschiedlich. Im allgemeinen zeichnen sie sich jedoch durch eine hohe Entwicklungsgeschwindigkeit aus bei gleichzeitig reduzierter Empfindlichkeit der Aufzeichnungsmaterialien gegenüber unbeabsichtigter vorzeitiger Entwicklung.

Ein druckempfindliches Material besteht beispielsweise aus mindestens 1 Paar von Blättern, die mindestens einen Farbbildner der Formel (I), gelöst oder dispergiert in einem nichtflüchtigen organischen Lösungsmittel, und einen sauren Entwickler enthalten.

Solche Verfahren und Zubereitungen sind beispielsweise aus den US-Patentschriften 2 800 457, 2 800 458, 2 948 753, 3 096 189 und 3 193 404 und aus den deutschen Offenlegungsschriften 2 555 080 und 2 700 937 bekannt.

Um eine frühzeitige Aktivierung der in dem druckempfindlichen Aufzeichnungsmaterial vorhandenen Farbbildner zu verhindern, werden diese vorzugsweise in Mikrokapseln eingeschlossen, die sich in der Regel durch Druck zerbrechen lassen.

Als Kapselwandmaterialien eignen sich z.B. Gelatine/Gummi arabicum, Polyamide, Polyurethane, Polysulfon amide, Polyester, Polycarbonate, Polysulfonate, Polyacrylate und Phenol-, Melamin- oder Harnstoff-Formaldehyd-Kondensate, wie sie beispielsweise in M. Gutcho, Capsule Technology and Microencapsulation, Processes and Applications, Herausgeber J.E. Vandegaar und den deutschen Offenlegungsschriften 2 237 545 und 2 119 933 beschrieben sind.

Bevorzugt werden beim erfindungsgemäßen Verfahren Mikrokapseln verwendet, deren Hüllen aus Polyadditionsprodukten, aus Polyisocyanaten und Polyamiden bestehen und beispielsweise in DE-OS 3 203 059 beschrieben werden.

Thermoreaktive Aufzeichnungssysteme umfassen z.B. wärmeempfindliche Aufzeichnungs- und Kopiermaterialien und -papiere.

Ein solches Material ist beispielsweise in der DE-OS 2 555 080 beschrieben.

Als Entwickler eignen sich die gleichen Elektronenakzeptoren, wie sie in druckempfindlichen Papieren verwendet werden, vorzugsweise phenolische Verbindungen, die beispielsweise in der DE-PS 1 251 348 beschrieben sind, sowie Borsäure und organische, vorzugsweise aliphatische Dicarbonsäuren.

Ein weiteres geeignetes thermoreaktives Entwicklungssystem ist in DE-OS 3 337 296 beschrieben, bei dem sauer modifizierte Polymerisate, vorzugsweise des Acrylnitrils, als Entwickler wirken.

Beispiel 1

23,7 g (0,13 mol) Benzophenon und 27,8 g (0,13 mol) 1-Ethyl-2,2,4-trimethyl-1,2,3,4-tetrahydrochinolin werden in 96,9 g (0,63 mol) Phosphoroxychlorid suspendiert und bei Raumtemperatur mit 35,9 g (0,25 mol) Phosphorpentoxid versetzt. Die Reaktionsmischung wird 20 h bei 90 °C verrührt und nach dem Abkühlen auf 10 bis 15 °C in 400 ml Methanol eingerührt, so daß die Temperatur 40 °C nicht übersteigt. Man gibt 150 ml Toluol zu und tropft innerhalb 1 h zur Farbstofflösung 373 g 30 %ige Natronlauge. Die Mischung wird 2 h bei 40 °C verrührt und dann auf 500 ml Wasser ausgetragen. Man trennt die organische Phase ab und entfernt das Lösungsmittel im Wasserstrahlvakuum. Zum Rückstand gibt man 150 ml Methanol, erwärmt kurz auf 60 °C und verrührt dann 48 h bei Raumtemperatur. Abfiltrieren und Trocknen im Vakuum bei 30 °C liefert 41,4 g (78,2 % der Theorie, bezogen auf Molgewicht 399,5) hellgraues Kristallpulver vom Schmelzpunkt 106-108 °C und der Formel

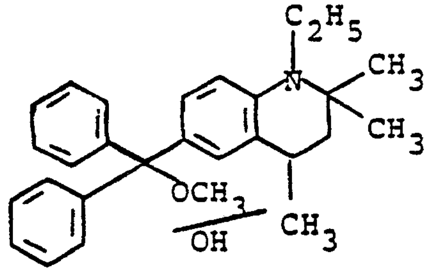

(1)

Eine Lösung in Eisessig wird orange mit $\lambda_{max}$ = 468 nm, und auf Säureton wird eine kräftige orange Farbe

mit sehr hohen Echtheiten entwickelt. Aus dem $^1H$-NMR-Spektrum geht hervor, daß der Farbbildner aus einem Gemisch von ca. 90 % Carbinolbasenmethylether und ca. 10 % Carbinolbase besteht.

Beispiel 2

Man arbeitet wie vorstehend beschrieben und fügt vor der Umsetzung mit Natronlauge noch zusätzlich 120 g Di-isopropylnaphthalin hinzu. Es wird - wie beschrieben -weiter aufgearbeitet, und nach der Entfernung von Toluol und Restwasser wird die verbleibende Lösung abfiltriert. Auf diese Weise erhält man 169 g einer dunkelgelben Lösung des in Beispiel 1 beschriebenen Farbbildners. Die Lösung enthält nach $E^1_1$-Messung in Eisessig 25 % Farbbildner. Die Lösung läßt sich leicht mit weiterem Diisopropyl-naphthalin, Chlorparaffin ($C_{12}$-$C_{18}$-n-Paraffin ca. 45 % Chlor) oder Weißöl aus Einsatzkonzentrationen in Aufzeichnungsmaterialien von 3 %, 5 % oder 7 % verdünnen.

Beispiel 3

9,1 g (0,05 mol) Benzophenon, 12,7 g (0,05 mol) 1-Hydroxyethyl-2,2,4-trimethyl-1,2,3,4-tetrahydrochinolin (86,7 %ig) und 14,2 g (0,1 mol) Phosphorpentoxid werden in 38,3 g (0,25 mol) Phosphoroxychlorid 20 h bei 90° C verrührt. Die auf 15 bis 20° C abgekühlte Schmelze wird nun so in 150 ml Methanol eingerührt, daß die Temperatur 40° C nicht übersteigt. Nach der Zugabe von 50 ml Toluol werden langsam 143 g (1,07 mol) 30 %ige Natronlauge zugetropft und die Mischung 2 h bei 40° C nachgerührt. Es wird mit 120 ml Wasser versetzt, die organische Phase abgetrennt, das Lösungsmittel destillativ entfernt und zum Rückstand 70 ml Methanol hinzugefügt. Die Mischung wird kurz auf 60° C erhitzt und dann 2 Tage bei Raumtemperatur verrührt. Nach der Kristallisation wird abfiltriert, mit wenig Methanol gewaschen und im Vakuum bei 30° C getrocknet. Ausbeute: 16,9 g (77,9 % der Theorie, bezogen auf Molgewicht 433,9) hellgraues Kristallpulver vom Schmelzbereich 80-85° C und der Formel:

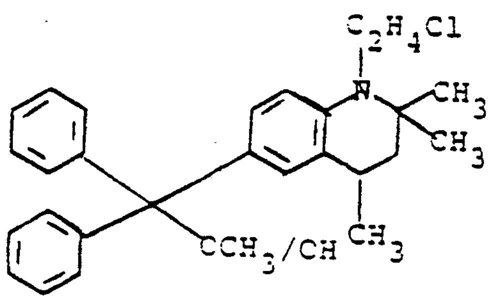

(2)

Eine Lösung in Essigsäure wird orange mit $\lambda_{max}$ = 480 nm. Auf Säureton erhält man ebenfalls eine kräftige orange Farbe mit hohen CF- und CB-Stabilitäten.

Beispiel 4

12,8 g (0,05 mol) 2-Methyl-4,4′-dimethoxy-benzophenon und 11,4 g (0,05 mol) 1-Ethyl-2,2,4-trimethyl-1,2,3,4-tetrahydrochinolin (90,4 %ig) werden in 41 g (0,27 mol) Phosphoroxychlorid bei Raumtemperatur gut verrührt. Nach Zugabe von 14,2 g (0,1 mol) Phosphorpentoxid wird die Mischung 12 h bei 40° C gerührt. Danach wird die Farbstoffschmelze auf 600 ml Eiswasser ausgetragen, die Lösung mit 10 g A-Kohle geklärt, abfiltriert und zum Filtrat 50 g Natriumchlorid hinzugefügt. Das sich abscheidende Farbstoffharz wird isoliert und getrocknet. Ausbeute: 16,9 g (70,7 % der Theorie) dunkelrotes Pulver vom Schmelzpunkt 78-79° C.

Zur Lösung von 23,8 g (0,05 mol) dieses Farbstoffes in 80 ml Dimethylformamid werden bei 40° C langsam 27 g (0,15 mol) 30 %ige Natriummethylatlösung zugetropft. Die Mischung wird 1 h bei dieser Temperatur gerührt, abfiltriert und auf 1000 ml Eiswasser gegeben. Nach Zugabe von 50 g Natriumchlorid wird der fast farblose Niederschlag abfiltriert, mit kaltem Wasser nachgewaschen und bei 30° C im Vakuum getrocknet. Man erhält 18 g (76 % der Theorie) fast farbloses Kristallpulver vom Schmelzpunkt 60-63° C

und der Formel:

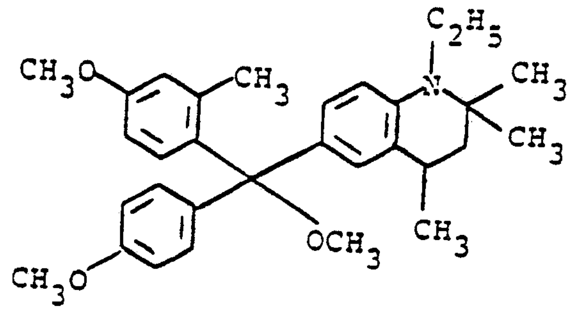

(3)

Eine Lösung in Eisessig wird kräftig rot mit $\lambda_{max}$ = 526 nm und $\lambda_2$ = 420 nm. Auf Säureton wird eine kräftige karminrote Farbe entwickelt.

Beispiel 5

Zu 96,6 g (0,63 mol) Phosphoroxychlorid und 28,8 g (0,2 mol) Phosphorpentoxid werden portionsweise in ca. 20 min 35,4 g (0,13 mol) 2,4,4′-Trimethoxy-benzophenon hinzugefügt, wobei die Temperatur auf ca. 30 bis 35 °C ansteigt. Zur Mischung werden schließlich 26,2 g (0,13 mol) 1-Ethyl-2,2,4-trimethyl-1,2,3,4-tetrahydrochinolin getropft, ohne daß sich die Temperatur wesentlich erhöht. Es wird weiter auf 40 °C erwärmt und 5 h bei dieser Temperatur verrührt. Danach wird die auf Raumtemperatur abgekühlte Schmelze in 300 ml Methanol so eingetragen, daß eine Temperatur von 50 °C nicht überschritten wird. Zu der methanolischen Farbstofflösung werden 200 ml Toluol hinzugefügt. Anschließend werden 500 g 30 %ige Natriummethylatlösung so zugetropft, daß sich die Temperatur bei ca. 40 °C einstellt. Die Mischung wird dann noch 1 h bei 40 °C verrührt. Danach werden 800 ml Wasser zugetropft und 30 min verrührt. Die sich unten abscheidende wäßrig-methanolische Phase wird abgetrennt. Aus der organischen Phase wird im Vakuum das Lösungsmittel und Restwasser entfernt. Zum Rückstand gibt man 100 ml Methanol, erwärmt kurz auf 50 bis 60 °C und läßt langsam auf Raumtemperatur abkühlen. Absaugen, Waschen mit wenig Methanol und Trocknen im Vakuum bei 30 °C liefert 41,2 g (64,8 % der Theorie) beige Kristalle vom Schmelzpunkt 70-75 °C und der Formel:

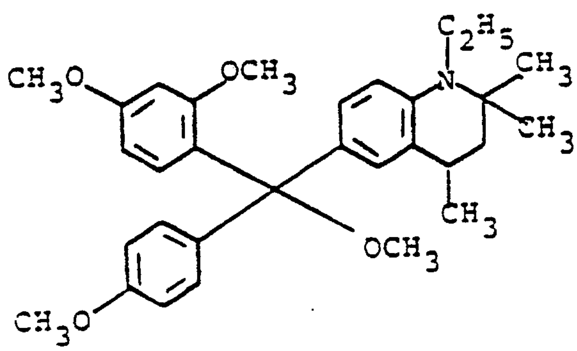

(4)

Eine Lösung in Eisessig wird dunkelviolett mit $\lambda_{max}$ = 556 nm und $\lambda_2$ = 444 nm. Auf Säureton erhält man einen farbstarken rotvioletten Druck mit hohen Echtheiten.

Beispiel 6

44,4 g (0,13 mol) 2,4′-Diethoxy-4-diethylamino-benzophenon und 22,8 g (0,13 mol) 1,2,3,3-Tetramethylindolin werden in 50 ml wasserfreiem Toluol vorgelegt. Bei Raumtemperatur werden portionsweise 24,7 g (0,18 mol) Phosphorpentoxid hinzugefügt und schließlich 96,6 g (0,63 mol) Phosphoroxychlorid so zugetropft, daß die Temperatur 50 °C nicht übersteigt. Die Reaktionsmischung wird noch 3 h bei dieser Temperatur verrührt. Die auf 20 °C abgekühlte Schmelze wird dann langsam in 1.000 ml Eiswasser

eingetragen. Zur Mischung werden 150 ml Toluol hinzugefügt und 370 g (2,78 mol) 30 %ige Natronlauge zugetropft. Die Temperatur stellt sich bei ca. 40 °C ein und wird 3 h unter Rühren beibehalten. Man läßt absitzen und trennt die sich unten abscheidende wäßrige Phase ab. Aus der organischen Phase werden im Wasserstrahlvakuum azeotrop Toluol und Restwasser entfernt. Zum Rückstand fügt man wenig Methanol hinzu und läßt unterhalb von 20 °C auskristallisieren. Abfiltrieren, Waschen und Trocknen im Vakuum bei 30 °C liefert 57,5 g (85,6 % der Theorie) hellgraues Kristallpulver vom Schmelzbereich 50-56 °C und der Formel:

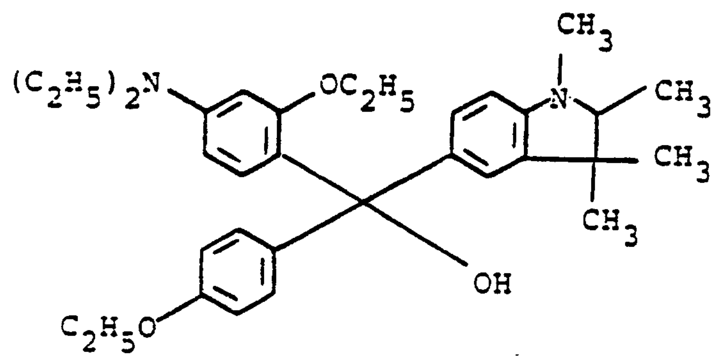

(5)

Eine Lösung in Eisessig wird grün mit $\lambda_{max}$ = 622 nm und $\lambda_2$ = 473 nm.

Der Farbbildner löst sich 20 %ig in Diisopropylnaphthalin und 30 %ig in Chlorparaffin ($C_{12}$-$C_{18}$-n-Paraffin ca. 45 % Chlor). Auf Säureton oder Bisphenol A erhält man kräftige dunkelgrüne Farbtöne.

Analog den Beispielen 1, 3, 5 und 6 werden folgende Farbbildner hergestellt:

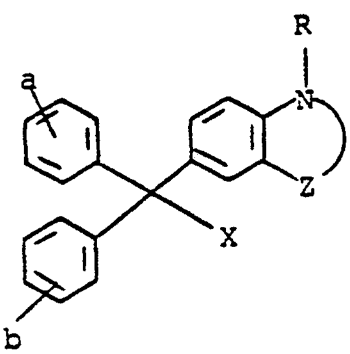

(6)

| Beisp. | a | b | 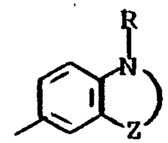 | X | Farbton auf Säureton oder Bisphenol A |
|---|---|---|---|---|---|
| 7 | 4-$OCH_3$ | 4-$OCH_3$ | 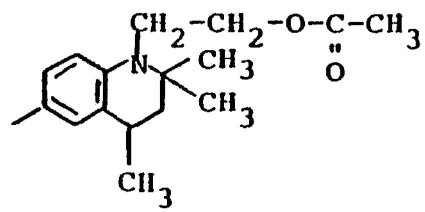 | OH | dunkelrot |
| 8 | 4-$OC_2H_5$<br>2-$CH_3$ | 4-$OC_2H_5$ | 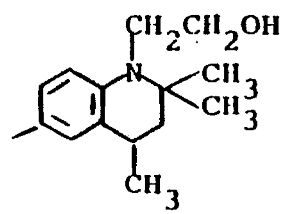 | OH | rot |
| 9 | 4-$OCH_3$<br>3-$OCH_3$ | 4-$OCH_3$ | 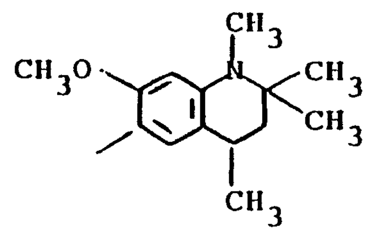 | $OCH_3$ | rotviolett |
| 10 | 4-$OC_4H_9$<br>2-Cl | 4-$OC_4H_9$ | 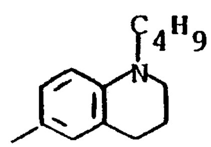 | $OCH_3$/OH | himbeerrot |

| Beisp. | a | b | 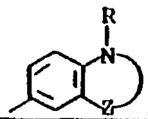 | X | Farbton auf Säureton oder Bisphenol A |
| --- | --- | --- | --- | --- | --- |
| 11 | 4-$OCH_3$<br>3-Cl | 4-$C_3H_7$-n | 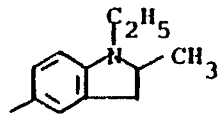 | $OC_4H_9$ | orangerot |
| 12 | 2-$OCH_3$ | H | 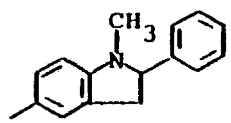 | $OC_2H_5$ | orange |
| 13 | 4-$OC_2H_5$ | 4-Cl<br>2-Cl | 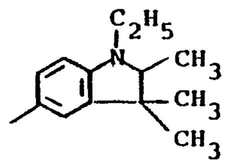 | $OC_3H_7$-i/OH | rot |
| 14 | 4-Cl<br>2-Cl | 4-Cl | 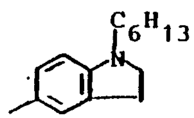 | $OCH_3$ | gelb |
| 15 | 2-Cl | 4H | 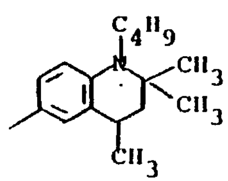 | OH | gelborange |

| Beisp. | a | b | 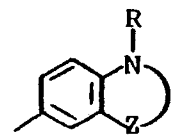 | X | Farbton auf Säureton oder Bisphenol A |
|---|---|---|---|---|---|
| 16 | 2-Cl | 4-$N(C_2H_5)_2$ | 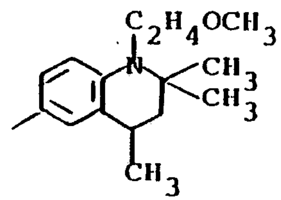 | $C_2H_4OCH_3$ | türkis |
| 17 | 4-$OC_2H_5$ | " | 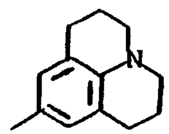 | $OC_2H_5$ | grün |
| 18 | 4-$OCH_3$ | 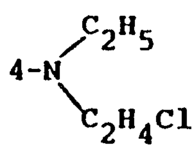 2-$CH_3$ | 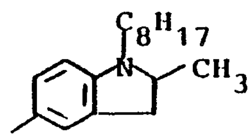 | OH | dunkelgrün |
| 19 | 4-$N(CH_3)_2$<br>2-$N(CH_3)_2$ | 4-$OCH_3$ | 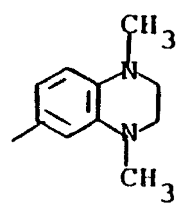 | $OCH_3$/OH | schwarzgrün |

| Beisp. | a | b | 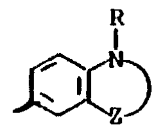 | X | Farbton auf Säureton oder Bisphenol A |
|---|---|---|---|---|---|
| 20 | 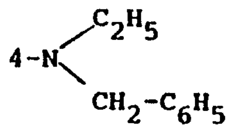 | 4-$OC_4H_9$<br>3-Cl | 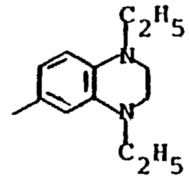 | $OC_3H_7$-i | olivgrün |
| 21 | 4-$OCH_3$ | 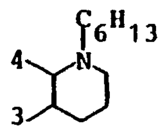 | 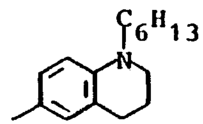 | $OCH_3$/OH | dunkelgrün |
| 22 | H | 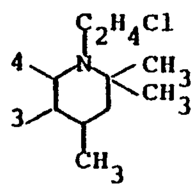 | 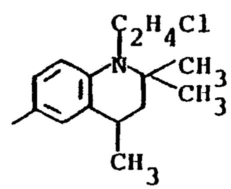 | $OCH_3$/OH | dunkelgrün |
| 23 | 4-$OCH_3$ | 4-$N(C_4H_9\text{-}n)_2$<br>2-$C_4H_9$-n | 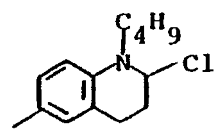 | $OC_4H_9$ | grün |
| 24 | " | 4-$N(CH_3)_2$ | 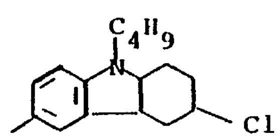 | $OC_4H_9$ | grün |

Beispiel 25

5 g des Farbbildners gemäß Beispiel 1 werden in einem Gemisch aus 60 g Dodecylbenzol und 40 g Chlorparaffin mit 45 % Cl-Gehalt gelöst. 223 g einer solchen Lösung werden mit 39,5 g Oxadiazintrion von

Desmodur H (NCO-Gehalt 20,5 %) vermischt. Anschließend erfolgt die Vermischung mit 320 g 0,5 %iger Polyvinylalkohollösung und die Emulgierung im Schergefälle eines Rotor/Stator-Emulgiergerätes. Die Vernetzung erfolgt mit 76 g 9,0 %iger Diethylentriaminlösung. Die Nachbehandlung erfolgt durch Erwärmen der Dispersion auf 60 °C und dreistündiges Rühren bei 60 °C. Es wird dabei eine 40 % Kapseln enthaltende Dispersion der Kapselgröße 7,3 µm erhalten.

250 ml dieser Dispersion werden vorgelegt und unter intensivem Rühren 40 g Cellulosefeinschliff (Arbocell BE 600/30 der Firma Rettenmeier und Söhne) langsam eingestreut. Nach mindestens 30 min intensivem Rühren erfolgt die Zugabe von 40 ml 50 %iger SBR-Latex (Baystal P 1600 der Fa. Bayer AG). Die resultierende 48,5 %ige Streichfarbe wird mit Wasser auf 30 % Feststoffgehalt verdünnt und mit einer Luftbürste auf die Rückseite eines handelsüblichen Basis-Papiers gestrichen. Der Auftrag beträgt nach dem Trocknen 5 g/m$^2$.

Das so bestrichene Papier wird mit der beschichteten Seite auf die mit Entwicklersubstanz beschichtete Seite eines handelsüblichen kohlefreien Durchschreibepapiers gelegt. Bei Ausführung eines Schreibdruckes auf das mit Kapseln beschichte Papier ergibt sich auf dem Durchschreibepapier eine orange Durchschrift, die am Licht stabil ist.

Beispiel 26

Verwendet man 5 g des Farbbildners von Beispiel 4 und arbeitet analog Beispiel 25, so erhält man ein mit Mikrokapseln beschichtetes Papier, das in analoger Weise eine rote Durchschrift liefert.

Beispiel 27

171 Teile einer ca. 13 %igen Lösung einer Polyacrylsäure mit einem mittleren Molekulargewicht unter 300.000 werden mit Triethanolamin auf einen pH-Wert von 4,5 gestellt und mit Wasser auf eine Gesamtmenge von 1.000 Teilen gebracht.

Zu dieser Lösung werden 160 Teile eines 90 %igen Melamin-Formaldehyd-Harzes (Luwipal 68 der Fa. BASF, Ludwigshafen) gegeben.

Anschließend werden 1.300 Teile einer Lösung von 5 % Farbgeber des Beispiels 2 in Diisopropylnaphthalin (KMC 113 der Fa. Rütgers Kureha Solvent, Duisburg) hinzugegeben, und mit einer Mischsirene wird bei hoher Drehzahl eine Emulsion hergestellt.

Hiernach wird mit 700 Teilen Wasser verdünnt, unter Rühren auf 60 °C erhitzt und 6 h bei 60 °C ausreagiert. Nach Abkühlen der Dispersion wird mit Triethanolamin neutralisiert.

Es wird eine 40 %ige Mikrokapseldispersion der mittleren Kapselgröße von 5 µm erhalten.

Beispiel 28

In einer Kugelmühle werden 32 g 4,4′-Isopropyliden-diphenol, 3,8 g Distearylamid des Ethylendiamins, 89 g Kaolin, 20 g eines zu 88 % hydrolysierten Polyvinylalkohols und 55 ml Wasser gemahlen, bis die Teilchengröße ca. 5 µm beträgt. In einer zweiten Kugelmühle werden 6 g der Verbindung des Beispiels 6, 3 g eines zu 88 % hydrolysierten Polyvinylalkohols und 60 ml Wasser zu einer Teilchengröße von ca. 3 µm gemahlen. Die beiden Dispersionen werden zusammengegeben und mit einem Trockenauftragsgewicht von 5,5 g/m$^2$ auf Papier gestrichen. Durch Berühren des Papiers mit einem erhitzten Kugelschreiber wird eine intensive grüne Farbe erhalten, die eine gute Licht- und Sublimierechtheit hat.

Beispiel 29

Nach DE-OS 3 337 296 werden in einer Kugelmühle 40 g eines feinpulvrigen Polyacrylnitrilpolymerisats, hergestellt aus 94 % Acrylnitril, 0,5 % Methallylsulfonsäure und 5,5 % Acrylsäuremethylester, mit 225 g einer 8 %igen wäßrigen Polyvinylalkohollösung und unter Zusatz von 1,3 g Distearylphosphorsäureester vermahlen. Eine zweite Dispersion wird aus 1 g der Verbindung des Beispiels 1 und 55 g einer 8 %igen wäßrigen Polyvinylalkohollösung hergestellt. Man mischt die Dispersion des Farbbildners mit der des Akzeptors im Verhältnis 1/10 und trägt die Mischung auf Cellulosepapier mittels einer Rakel auf und trocknet sie, so daß man ein Auftragsgewicht von 6 bis 7 g/m$^2$ erhält. Das Papier ist mit Schreibmitteln, wie

z.B. einem Kugelschreiber, beschriftbar. Es ist gegen starken Druck unempfindlich. Bei Berührung des Papiers mit einem beheizten Stift erhält man eine klare, scharfe, schattenfreie, orange Schrift. Die Lichtechtheit der Färbung ist ausgezeichnet.

## Ansprüche

1. Farbbildner der allgemeinen Formel

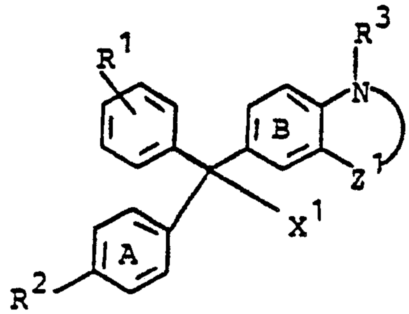

,

worin
$X^1$ Hydroxy, Alkoxy, Alkenyloxy, Aralkoxy, Cycloalkoxy, Aryloxy oder Acyloxy,
$R^1$ Wasserstoff, Halogen, Alkyl oder Alkoxy,
$R^2$ Wasserstoff, Alkoxy, Aralkoxy, Aryloxy oder einen Rest der Formel

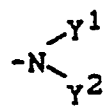

$Y^1$ und $Y^2$ unabhängig voneinander Alkyl, Cycloalkyl oder Aralkyl bedeuten,
$R^2$ mit A in o-Stellung einen heterocyclischen Ring bilden kann, dem Ring A außerdem in o-/m-Stellung zu $R^2$ ein Benzolring anelliert sein kann,
$R^3$ Wasserstoff, Alkyl, Alkenyl, Aralkyl, Cycloalkyl oder Aryl bedeutet oder $R^3$ mit Ring B in der o-Stellung zum Stickstoff verbunden ist und dann die restlichen Glieder eines teilhydrierten oder ganz hydrierten, heterocyclischen 5- oder 6-gliedrigen Ringes, der ein weiteres Heteroatom aus der Reihe O, S, N-$R^1$ oder N-$R^2$ enthalten kann, bedeutet,
$Z^1$ für die restlichen Glieder eines teilhydrierten oder ganz hydrierten, heterocyclischen 5-oder 6-gliedrigen Ringes, der ein weiteres Heteroatom aus der Reihe O, S, N-$R^1$ oder N-$R^2$ enthalten kann, steht, mit der Maßgabe, daß $Z^1$ nicht für $-CH_2-CH_2-\underset{|}{C}(Alkyl)_2$

steht, wenn die Dialkylmethyl-Gruppe mit dem Stickstoffatom verbunden ist,
die Ringe A und B sowie die cyclischen und acyclischen Reste weitere in der Farbstoffchemie übliche, nichtionische Substituenten tragen können.

2. Farbbildner gemäß Anspruch 1 der allgemeinen Formel

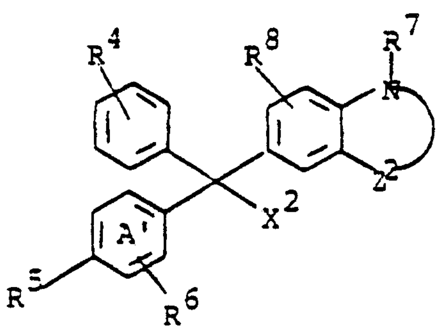

,

worin

$X^2$ Hydroxy, gegebenenfalls durch $C_1$-$C_4$-Alkoxy substituiertes $C_1$-$C_{12}$-Alkoxy oder Benzyloxy,

$R^4$ Wasserstoff, Chlor, $C_1$-$C_{12}$-Alkyl oder $C_1$-$C_4$-Alkoxy,

$R^5$ Wasserstoff, $C_1$-$C_{12}$-Alkoxy, Benzyloxy, Phenoxy oder einen Rest der Formel

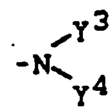

$R^6$ Wasserstoff, Chlor, $C_1$-$C_{12}$-Alkyl, $C_1$-$C_{12}$-Alkoxy, $C_1$-$C_4$-Alkylamino oder Di-$C_1$-$C_{12}$-Alkylamino,

$Y^3$ und $Y^4$ unabhängig voneinander gegebenenfalls durch Chlor, Cyano, $C_1$-$C_4$-Alkoxycarbonyl oder $C_1$-$C_4$-Alkoxy substituiertes $C_1$-$C_{12}$-Alkyl, Cyclohexyl oder Benzyl, das durch Chlor, $C_1$-$C_4$-Alkyl oder $C_1$-$C_4$-Alkoxy substituiert sein kann, oder

$R^5$ mit $A'$ in o-Stellung ein heterocyclisches Ringsystem der Formel

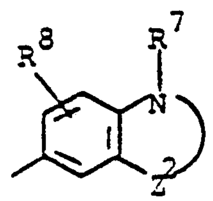 (1)

bilden kann und der Rest (1) für

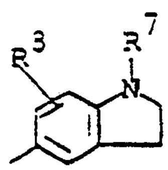
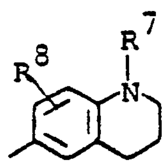
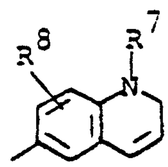
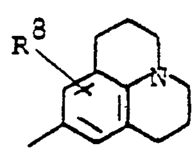

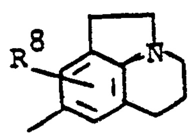
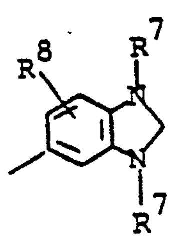
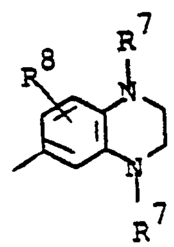
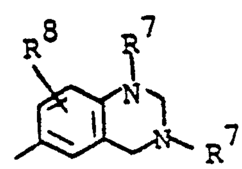

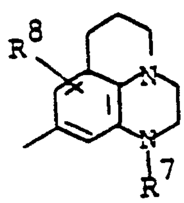
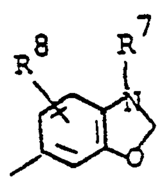
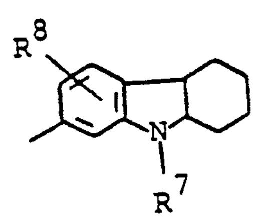

steht,

wobei die (teil)gesättigten Ringe bis zu 4 Reste aus der Gruppe Chlor, $C_1$-$C_4$-Alkyl, $C_1$-$C_4$-Alkoxy oder Phenyl tragen können, mit der Maßgabe, daß die 2-Stellung des Tetrahydrochinolinringes nicht durch 2 $C_1$-$C_4$-Alkylgruppen substituiert ist, wenn die 3- und 4-Stellung unsubstituiert sind, und

$R^7$ Wasserstoff, gegebenenfalls durch Chlor, Hydroxy, $C_1$-$C_4$-Alkoxy oder Acetyloxy substituiertes $C_1$-$C_{12}$-Alkyl, Cyclohexyl, $C_1$-$C_4$-Alkylcarbonyl oder gegebenenfalls durch Chlor oder $C_1$-$C_4$-Alkyl substituiertes

Benzyl oder Phenyl und

$R^8$ Wasserstoff, Chlor, $C_1$-$C_4$-Alkyl, $C_1$-$C_4$-Alkoxy, Amino, das durch 1 oder 2, gegebenenfalls durch Chlor, Cyan, $C_1$-$C_4$-Alkoxycarbonyl, Hydroxy oder $C_1$-$C_4$-Alkoxy substituierte $C_1$-$C_4$-Alkyl-, Cyclohexyl-, Phenyl- oder Benzylreste substituiert sein kann,

bedeuten.

3. Farbbildner gemäß Anspruch 1 der allgemeinen Formel

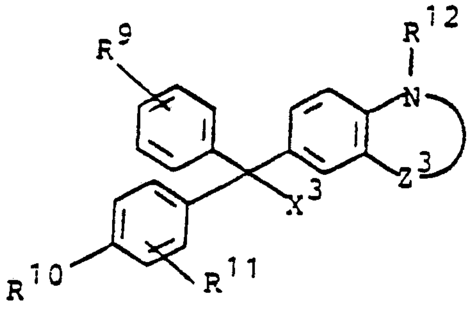

,

worin

$X^3$ Hydroxy oder $C_1$-$C_{12}$-Alkoxy,

$R^9$ Wasserstoff, Chlor, $C_1$-$C_{12}$-Alkyl, Methoxy oder Ethoxy,

$R^{10}$ $C_1$-$C_4$-Alkoxy, Benzyloxy oder einen Rest der Formel

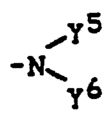

,

$R^{11}$ Wasserstoff, Methyl, Ethyl, Propyl, Butyl, Methoxy, Ethoxy, Dimethylamino oder Diethylamino,

$Y^5$ und $Y^6$ unabhängig voneinander, gegebenenfalls durch Chlor, Cyano oder $C_1$-$C_4$-Alkoxy substituiertes $C_1$-$C_{12}$-Alkyl oder Benzyl,

$R^{12}$ Wasserstoff, gegebenenfalls durch Chlor, Hydroxy, Methoxy, Ethoxy oder Acetyloxy substituiertes $C_1$-$C_{12}$-Alkyl oder Benzyl, bedeuten oder

$R^{10}$ und $R^{11}$ Glieder sind, die zusammen mit dem Benzolring, an den sie gebunden sind, zur Vervollständigung eines Ringsystems der Formel

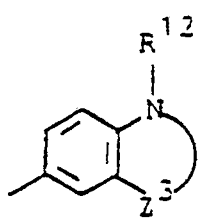

(2)

erforderlich sind, wobei (2) für

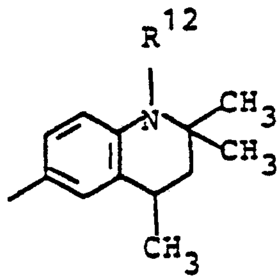

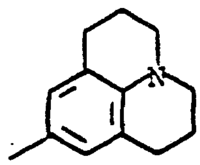

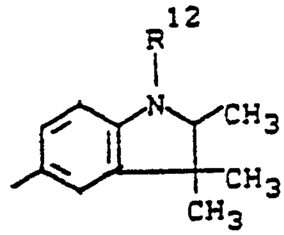

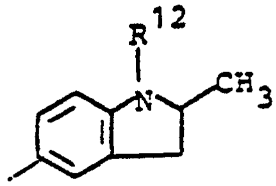

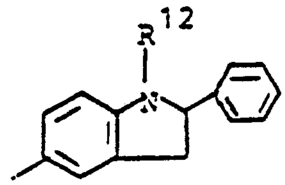

steht.

4. Hochkonzentrierte Lösungen von Farbbildnern des Anspruchs 1 in wasserunlöslichen organischen Lösungsmitteln aus der Gruppe der gegebenenfalls chlorierten Kohlenwasserstoffe und Phthalsäureester.

5. Verfahren zur Herstellung von Farbbildnern des Anspruchs 1, dadurch gekennzeichnet, daß man Ketone der Formel

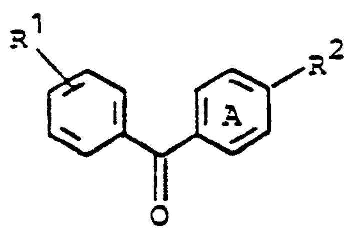

mit Aminen der Formel

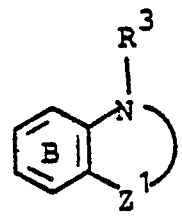

oder Ketonen der Formel

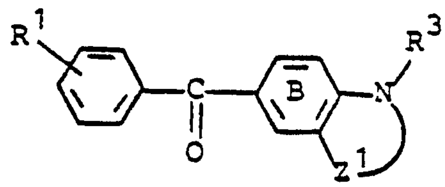

mit Aminen der Formel

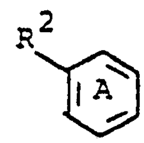

in Gegenwart eines Kondensationsmittels, das ein Anion $An^-$ liefert, zu den Farbsalzen der Formel

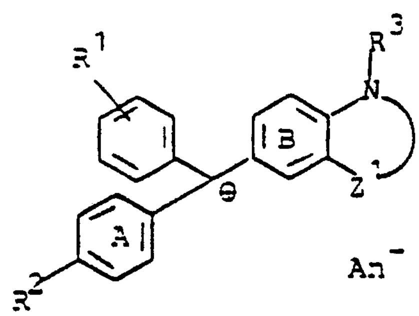

kondensiert, worin
A, B, $R^1$, $R^2$, $R^3$ und $Z^1$ die vorgenannte Bedeutung haben und
$An^-$ ein Anion aus der Reihe Cl, Br, Acetat, Sulfat oder Phosphat bedeutet, und
diese ohne Zwischenisolierung mit den Basen der Formel
$MeX^1$ ,
worin
$X^1$ die in Anspruch 1 genannte Bedeutung hat und
Me ein Alkali- oder Erdalkaliion, insbesondere Natrium oder Kalium, bedeutet,
in einem für die Umsetzung üblichen organischen Reaktionsmedium umsetzt, ein wasserunlösliches Lösungsmittel zusetzt und nach der Reaktion, gegebenenfalls nach Zusatz von Wasser, die entstehenden Schichten abtrennt.

6. Verfahren zur Herstellung von Lösungen des Anspruchs 4, dadurch gekennzeichnet, daß man die Umsetzung nach Anspruch 5 in Gegenwart von niedrigsiedenden und hochsiedenden, wasserunlöslichen Lösungsmitteln durchführt und nach der Abtrennung aus der organischen Phase die niedrigsiedenden Lösungsmittel entfernt.

7. Verwendung der Farbbildner des Anspruchs 1 in Thermoreaktivpapieren und druckempfindlichen Aufzeichnungsmaterialien.

8. Verwendung der Lösungen des Anspruchs 4 in druckempfindlichen Aufzeichnungsmaterialien.